# EUROPÄISCHE PATENTSCHRIFT

(11) **EP 2 210 750 B1**
(45) Veröffentlichungstag und Bekanntmachung des Hinweises auf die Patenterteilung: **28.09.2011**
(21) Anmeldenummer: 09015627.4
(22) Anmeldetag: 17.12.2009
(51) Int. Cl.: B60C 27/10, B60C 27/16, B60C 27/00

(54) **Gleitschutzvorrichtung mit Traktionselementen und biegeschlaffer Halteeinrichtung**
Slip protection device with traction elements and flexible holding device
Dispositif antidérapant doté d'éléments de traction et dispositif de retenue à tour lâche

(30) Priorität: 13.01.2009 DE 102009004808
(43) Veröffentlichungstag der Anmeldung: 28.07.2010
(73) Patentinhaber: RUD Ketten Rieger & Dietz GmbH u. Co. KG, 73432 Aalen (DE)
(72) Erfinder: Winkler, Martin, 73457 Essingen (DE)
(74) Vertreter: Grünecker, Kinkeldey, Stockmair & Schwanhäusser Anwaltssozietät

(56) Entgegenhaltungen:
- DE-C- 155 991
- FR-A- 438 872
- US-A- 1 830 983
- US-A- 3 856 069
- US-A- 4 378 833

## Beschreibung

Die vorliegende Erfindung betrifft eine Gleitschutzvorrichtung für ein Fahrzeugrad mit Traktionselementen, wenigstens einer die Traktionselemente im montierten Zustand auf der Lauffläche des Fahrzeugrades haltenden biegeschlaffen Halteeinrichtung und mit wenigstens einem Anschlussorgan, durch welches die wenigstens eine Halteeinrichtung mit den Traktionselementen verbunden ist, wobei die Halteeinrichtung am Anschlussorgan sich vom Anschlussorgan in radialer und in Umfangsrichtung weg in Richtung der Radnabe erstreckend vororientiert festgelegt ist.

Gleitschutzvorrichtungen, wie Schneeketten, werden seit langer Zeit verwendet, um die Bodenhaftung von Fahrzeugen zu erhöhen, die bei Eis, Schnee oder Schlamm angetrieben werden müssen.

Die heutzutage üblicherweise verwendeten Schneeketten weisen Traktionselemente, z.B. Kettenstränge auf, die über eine Halteeinrichtung, beispielsweise eine Spannkette oder speichenartige Haltearme, die sich von einer im Bereich der Fahrzeugnabe angebrachten Befestigungsvorrichtung bis zu Gleitschutzelementträgerplatten des Laufnetzes erstrecken, auf dem Fahrzeugrad gehalten werden.

Die US 1,830,983 zeigt eine Gleitschutzvorrichtung mit streifenförmigen oder kreuzförmigen Traktionselementen, die durch eine Seitenkette auf dem Fahrzeugrad gehalten werden.

Besonders leichte Gleitschutzvorrichtungen umfassen eine Gurtbefestigung, bei der die Traktionselemente über biegeschlaffe Haltegurte auf dem Fahrzeugreifen verankert werden. So ist aus der DE 19 86 380 eine Schneekette bekannt, bei der Laufnetzsegmente von zwei Metallbügeln seitlich gehalten und mit einem Gurt am Fahrzeugrad befestigt sind.

Auch aus den Druckschriften US 3,856,069, US 4,378,833, US 4,960,160 und FR 2 320 840 sind Gleitschutzvorrichtungen mit biegeschlaffen Haltegurten bzw. Haltebändern bekannt.

Bei derartigen Gleitschutzvorrichtungen mit biegeschlaffen Halteeinrichtungen besteht jedoch das Problem, dass diese Halteeinrichtung stärker zu einer Überwanderung neigen, was bedeutet, dass ihre Umlaufgeschwindigkeit im Bereich des Anschlussorgans und der Traktionselemente, insbesondere beim Anfahren, größer ist als die Umlaufgeschwindigkeit an dem der Radnabe zugewandte Ende. Durch die Überwanderung kann die Halteeinrichtung am Anschlussorgan verrutschen, was zu einer Quetschung bzw. Stauchung oder sogar zum Hängenbleiben der Halteeinrichtung in einer Ecke des Anschlussorgans führen kann, wodurch die Halteeinrichtung ungleichmäßig belastet wird und stärker verschleißt.

Gattungsgemäße Gleitschutzvorrichtungen mit biegeschlaffen Haltegurten bzw. Haltebändern, die in Umfangsrichtung und in radialer Richtung vororientiert sind, zeigen die DE 155 991 und FR 438 872.

Die Aufgabe der vorliegenden Erfindung ist daher, eine leicht zu montierende, zuverlässige Gleitschutzvorrichtung mit wenigstens einer biegeschlaffen Halteeinrichtung bereitzustellen, die gleichmäßiger belastet wird und weniger verschleißt.

Diese Aufgabe wird für die eingangs genannte Gleitschutzvorrichtung dadurch gelöst, dass das Anschlussorgan ein im Wesentlichen dreieckiges Auge aufweist.

Durch die vororientierte Festlegung sowohl in radialer Richtung als auch in Umfangsrichtung wird nicht nur die in radialer Richtung zur Radnabe gerichtete Halte- bzw. Spannkraft am Anschlussorgan in die Halteeinrichtung eingeleitet. Auch die aufgrund der Überwanderung am Anschlussorgan auftretende in Umfangsrichtung wirkende Überwanderungs- bzw. Umlaufkraft wird aufgefangen, wodurch ein Verrutschen der biegeschlaffen Halteeinrichtung am Anschlussorgan vermieden wird.

Die vorliegende Erfindung kann durch eine Reihe von voneinander jeweils unabhängigen Ausgestaltungen weiter verbessert werden. Diese Ausgestaltungen und die damit verbundenen Vorteile sind im Folgenden kurz beschrieben.

Gemäß einer ersten vorteilhaften Ausführungsform kann die Halteeinrichtung an einer in radialer und in Umfangsrichtung weisenden Lastaufnahmefläche des Anschlussorgans festgelegt sein, z.B. indem die Halteeinrichtung die Lastaufnahmefläche hintergreift oder umschlingt. Durch die Lastaufnahmefläche kann auf einfache Weise die vororientierte Festlegung der Halteeinrichtung am Anschlussorgan ermöglicht werden.

Die Verbindung von Traktionselementen und Halteeinrichtung durch das Anschlussorgan kann auf konstruktiv einfache Weise erreicht werden, indem ein Anschlagsmittel, an dem die Halteeinrichtung angeschlagen ist, als Anschlussorgan vorgesehen ist. Besonders vorteilhaft ist es, wenn das Anschlagsmittel die Lastaufnahmefläche aufweist, so dass die Halteeinrichtung direkt in der gewünschten Vororientierung an der Lastaufnahmefläche des Anschlagmittels festgelegt bzw. mit dieser verbunden werden kann.

Ein leicht zu fertigendes Anschlussorgan, das die vororientierte Festlegung ermöglicht, kann ein im Wesentlichen dreieckiges Auge aufweisen, das beispielsweise in eine an einem Traktionselement angebrachte Anschlusslasche gefertigt ist. Das Auge kann asymmetrisch ausgestaltet sein, wodurch eine symmetrische Anbringung des Anschlussorgans an einem Traktionselement in radialer Richtung schon durch die Form des Auges zu der gewünschten Vororientierung führt, bei welcher ein Schenkel des Auges die Lastaufnahmefläche ausbilden kann.

Als biegeschlaffe Halteeinrichtungen können beispielsweise solche eingesetzt werden, die Gurte, Seile, Bänder, Riemen und/oder Schlaufen umfassen, wobei insbesondere Halteeinrichtung umfassend wenigstens ein Haltegurt vorteilhaft sind, weil Haltegurte ein geringes Gewicht aufweisen, dabei jedoch extrem reißfest sind und eine in radialer Richtung wirkende Spannkraft über die gesamte Gurtbreit weiterleiten können.

Gemäß einer weiteren, einfach zu fertigenden und kostengünstigen Ausführungsform kann am Anschlussorgan wenigstens einen Anbindungssteg vorgesehen sein, der die Lastaufnahmefläche ausbildet. Diese Ausführungsform kann vorzugsweise für Halteeinrichtungen mit Haltegurten oder -schlaufen eingesetzt werden, die somit einfach über ihre gesamte Breite plan anliegend an dem Anbindungssteg festgelegt und verankert werden können.

Insbesondere kann ein Haltebügel mit zwei im wesentlichen parallel zueinander verlaufenden Halteschenkel und dem dazwischen verlaufenden Anbindungssteg das Anschlussorgan ausbilden. Dieser Haltebügel ist nicht nur leicht herzustellen, sondern bietet auch eine hohe Festigkeit und kann einfach über seine Halteschenkel direkt an einem Traktionselement, z.B. einem Gleitschutzelementträger, angebracht sein.

Die schräge Vororientierung des Anbindungssteges in radialer Richtung und in Umlaufrichtung kann auf konstruktiv besonders einfache Weise erreicht werden, indem sich der Anbindungssteg im Wesentlichen gerade und schräg zwischen den Halteschenkeln erstreckt. Werden die Halteschenkel in radialer Richtung zum Traktionselement angeordnet, führt der schräge Verlauf des Anbindungssteges zwischen den Halteschenkel automatisch zu der gewünschten Vororientierung.

Alternativ kann der Anbindungssteg auch im Wesentlichen winkelförmig zwischen den beiden Halteschenkeln verlaufen. Dabei bildet einer der beiden Stegabschnitte bzw. Stegschenkel des winkelförmigen Steges den Anbindungssteg aus. Der Vorteil eines solchen, vorzugsweise symmetrisch winkelförmig ausgebildeten Steges ist, dass die Montage von derartigen Haltebügeln besonders einfach ist, da man nicht auf das richtige Einschieben des Haltebügels zur korrekten Ausrichtung des Befestigungssteges für die Vororientierung der Halteeinrichtung achten muss. Dieser Vorteil trifft natürlich auch auf eine Ausführungsform zu, bei welcher das Anschlussorgan ein symmetrisches dreieckiges Auge oder Anschlagsmittel aufweist.

Ein Verrutschen des Gurtes, speziell beim Spannen der erfindungsgemäßen Gleitschutzvorrichtung in radialer Richtung, kann dadurch begrenzt und unterbunden werden, dass die Lastaufnahmefläche in Umlaufrichtung unter einem spitzen Winkel an einen Verschiebeanschlag stößt. Ein Abrutschen der Halteeinrichtung von der Lastaufnahmefläche kann beispielsweise durch ein dreieckiges Auge vermieden werden, dessen einer Anschlagsschenkel die Lastaufnahmefläche bildet, die mit dem in Umlaufrichtung vorderen Schenkel, insbesondere aber mit den beiden angrenzenden Schenkel unter einem spitzen Winkel zusammentrifft. Vorteilhafterweise kann auch einer der Haltestege eines Haltebügels den Verschiebeanschlag ausbilden, vorzugsweise, indem dieser Halteschenkel unter einem spitzen Winkel zum Anbindungsschenkel ausgerichtet ist.

Eine besonders leichte Gleitschutzvorrichtung, bei der auf konstruktiv einfache Weise die vororientierte Festlegung der Halteeinrichtung erreicht werden kann, weist als Traktionselemente ein Laufnetz mit Gleitschutzelementträgern auf, wobei wenigstens ein Anschlussorgan an einem Gleitschutzelementträger angebracht ist. So kann beispielsweise das Anschlussorgan, etwa in Form eines dreieckigen Auges, direkt in dem Gleitschutzelementträger gefertigt oder von außen an diesem befestigt sein. Auch kann ein Haltebügel mit seinen zwei Halteschenkeln in den Gleitschutzelementträger eingesetzt sein, wobei die Halteschenkel die Gleitschutzelementträgerplatte im Bereich des Anschlussorgans stabilisieren.

Gemäß einer weiteren vorteilhaften Ausführungsform kann wenigstens ein Befestigungselement den Haltebügel am Gleitschutzelementträger sichern, wodurch ein unbeabsichtigtes Abnehmen ausgeschlossen wird. Vorzugsweise ist das Befestigungselement mit einem der Haltebügel wiederholt lösbar verbindbar ausgestaltet. Besonders vorzugsweise kann das wenigstens eine Befestigungselement ein Gleitschutzelement ausbilden, wodurch die Traktion des Gleitschutzelementträgers weiter verbessert wird. Insbesondere kann das Befestigungselement aus einem Material bestehen, das eine höhere Abriebfestigkeit als die Trägerplatte aufweist und kann beispielsweise um den Halteschenkel herum angeordnet mit diesem verbunden werden. Somit fungiert das Befestigungselement neben der Sicherung des Haltebügels an der Trägerplatte ferner als ein weiteres den Abrieb der Trägerplatte reduzierendes Verschleiß- und Gleitschutzelement.

Eine weitere Ausführungsform sieht vor, dass sich die Einführöffnung von einer Axialseite der Trägerplatte des Gleitschutzelementträgers bis zu einer von außen zugänglichen Ausnehmung der Trägerplatte verläuft. Das Befestigungselementes ist vorzugsweise in der Ausnehmung der Trägerplatte, beispielsweise einer Aushöhlung der Trägerplatte, deren Zugangsbereich vollständig von der Trägerplatte umschlossen ist, angeordnet. Diese Anordnung ermöglicht es, das verschleißreduzierende, abriebfeste Befestigungselement in der Trägerplatte zu platzieren. Auf diese Weise werden durch das Befestigungselement insbesondere die Bereiche um die Ausnehmung der Trägerplatte herum vor Verschleiß geschützt. Außerdem bildet das Befestigungselement in vorteilhafter Weise ferner gleichzeitig ein weiteres Gleitschutzelement aus. Da das eine Ende der Einführöffnung im Rand der Trägerplatte mündet, ist eine besonders einfache Montage des Laufnetzes durch Einschieben der freien Enden der Halteschenkel durch die in der Axialseite befindlichen und somit gut zugänglichen Einführöffnungen möglich. Vorzugsweise erstreckt sich die Öffnung von der Lauffläche der Trägerplatte aus durch diese hindurch und kann die Kraft von dem Fahrzeugreifen direkt auf die Fahrbahn übertragen, ohne die Trägerplatte zu beanspruchen und zu verschleißen.

Ein besonders kostengünstiges, einfaches und leicht mit dem Haltebügel verbindbares Befestigungsmittel ist eine Befestigungshülse. Insbesondere zylindrische Hülsen sind leicht aus abriebfesten Materialien zu fertigen, können auf einfache Weise über einen Halteschenkel des Haltebügels geschoben und mit diesem durch Pressen kraftschlüssig verbunden werden, und bieten ferner den Vorteil eines leicht austauschbaren Verschleißelementes.

Besonders gut kann eine Befestigungshülse den Verschleiß der Trägerplatte des erfindungsgemäßen Gleitschutzelementträgers reduzieren, sofern, gemäß einer weiteren Ausführungsform, der Außendurchmesser der Befestigungshülse in etwa der Stärke der Trägerplatte im Bereich der Ausnehmung entspricht. Dadurch wird die biegsame und kompressible Trägerplatte insbesondere im Bereich um die Befestigungshülse herum geschont, da die Hülse die Kräfte von der Fahrbahn aufnimmt und direkt auf das Fahrzeugrad überträgt, ohne die Trägerplatte zu belasten.

Sofern eine Gleitschutzvorrichtung verwendet wird, bei der die von der Halteeinrichtung an einer der Fahrzeugradseiten aufgebrachte Kraft auf die gegenüberliegende Fahrzeugradseite übertragen werden muss, kann, um ein Verrutschen der Traktionselemente auf der Lauffläche zu unterbinden, an sich in axialer Richtung gegenüberliegenden Seiten eines Traktionselementes jeweils ein Anschlussorgan vorgesehen sein.

Vorzugsweise kann die Gleitschutzvorrichtung einen Gleitschutzelementträger umfassen, an dessen sich im montierten Zustand im Wesentlichen in axialer Richtung weisenden Axialseiten jeweils ein Anschlussorgan vorgesehen ist, beispielsweise jeweils ein Haltebügel in die Trägerplatte eingesetzt ist, so dass der Gleitschutzelementträger als kraftübertragendes Element die beiden Anschlussorgan koppelt.

Eine Gleitschutzvorrichtung, die bei unverändert guten Traktionseigenschaften geräuschärmer ist und weniger verschleißt, kann in einer weiteren vorteilhafte Ausführungsform einen Gleitschutzelementträger, umfassend eine Trägerplatte, die traktionserhöhende Gleitschutzelemente und an sich gegenüberliegenden axialen Randbereichen jeweils wenigstens eine Aufnahme für das Laufnetz, und jeweils einen Haltebügel, der einen Anbindungssteg und zwei im Wesentlichen parallel zueinander verlaufende in eine Einstecköffnung der Trägerplatte eingesetzte Halteschenkel aufweist, wobei wenigstens jeweils einer der Halteschenkel die jeweilige Aufnahme durchquert, und wobei die Trägerplatte zwischen den sich gegenüberliegenden Enden der Halteschenkel einen biegsamen Bereich mit gegenüber den von den Halteschenkeln eingenommenen Bereichen erhöhter Verformbarkeit aufweist.

Die Halteschenkel durchdringen bei dieser Ausführungsform die Trägerplatte nicht komplett, so dass die Mitte der Trägerplatte biegsamer und torsionsfähiger als der Bereich mit den versteifenden Halteschenkel bleibt. Dies wirkt sich vorteilhaft auf die Haftreibungsbedingungen zwischen Fahrzeugrad und Fahrbahn sowie die Geräuschentwicklung bei trockener Fahrbahn aus, da eine biegsamere Trägerplatte sich besser an Fahrbahnunebenheiten oder Verformungen der Fahrzeugrades bei Kurvenfahrt anpassen kann.

Schließlich kann das wenigstens eine Anschlussorgan auf der Lauffläche und/oder einer Flanke des Fahrzeugrades angeordnet sein. Bei der Anordnung auf einer der Fahrzeugradflanke kommen die Anschlussorgane im Betrieb nicht zwischen Rad und Untergrund zu liegen, wodurch sie und insbesondere die daran festgelegte Halteeinrichtung geschont werden. Bei einer Anbringung der Anschlussorgane auf der Lauffläche ist vorteilhaft, dass in diesem Fall die Anschlussorgane gleichzeitig Traktionselemente ausbilden, welche die Bodenhaftung verbessert.

Im Folgenden ist die Erfindung mit Bezug auf die Zeichnungen anhand mehrerer Ausführungsformen, deren unterschiedliche Merkmale gemäß den obigen Bemerkungen beliebig miteinander kombinierbar sind, näher erläutert.

Es zeigen:
- Fig. 1: eine schematische perspektivische Darstellung einer erfindungsgemäßen Gleit- schutzvorrichtung gemäß einer ersten Ausführungsform;
- Fig. 2: eine schematische perspektivische Darstellung einer Gleitschutzelementträgerplat- te für eine erfindungsgemäße Gleitschutzvorrichtung;
- Fig. 3: eine Aufsicht auf die Lauffläche der Trägerplatte der Fig. 2;
- Fig. 4: einen Ausschnitt der Unterseite der Trägerplatte gemäß Fig. 2 und 3;
- Fig. 5: eine Vergrößerung des in Fig. 3 mit A bezeichneten Ausschnittes der Trägerplatte;
- Fig. 6: eine Seitenansicht der Trägerplatte der Fig. 2 und 3 betrachtet in Umlaufrichtung der montierten Gleitschutzvorrichtung;
- Fig. 7: eine schematische Seitenansicht der Trägerplatte der Fig. 2 und 3 in axialer Rich- tung betrachtet;
- Fig. 8: einen Haltebügel für eine erfindungsgemäße Gleitschutzvorrichtung, gemäß einer ersten Ausführungsform;
- Fig. 9: eine schematische perspektivische Aufsicht auf die Lauffläche der erfindungsge- mäßen Gleitschutzvorrichtung der Fig. 1;
- Fig. 10: eine schematische Seitenansicht des Gleitschutzelementträgers der Fig. 9 in Um- laufrichtung betrachtet;
- Fig. 11: eine Schnittdarstellung entlang I-I der Trägerplatte der Fig. 3;
- Fig. 12: einen Haltebügel für einen Gleitschutzelementträger, gemäß einer zweiten Ausfüh- rungsform;
- Fig. 13: eine schematische Aufsicht auf die Lauffläche eines Gleitschutzelementträgers umfassend den Haltebügel der Fig. 12 gemäß der zweiten Ausführungsform;
- Fig. 14: eine schematische perspektivische Darstellung einer erfindungsgemäßen Gleit- schutzvorrichtung gemäß einer weiteren Ausführungsform; und
- Fig. 15: eine schematische perspektivische Darstellung einer erfindungsgemäßen Gleit- schutzvorrichtung gemäß einer weiteren Ausführungsform ohne Gleitschutzele- mentträger.

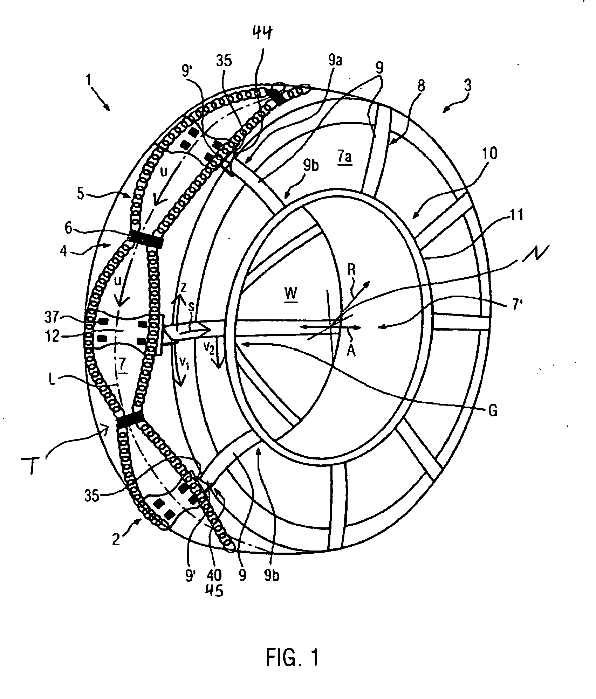

Zunächst wird der schematische Aufbau einer auf einem Fahrzeugrad 3 montierten erfindungsgemäßen Gleitschutzvorrichtung 1 mit Bezug auf Fig. 1 dargestellt.

Die Gleitschutzvorrichtung 1 weist als Traktionselemente T ein Laufnetz 4 mit Kettensträngen 5, Gleitschutzelementträgern 2 und gegebenenfalls Querstegen 6 und/oder Verkürzungselementen 6 auf.

Im montierten Zustand der Gleitschutzvorrichtung 1 liegt das Laufnetz 4 auf der Radlauffläche 7, und somit auch im Bereich der Radaufstandsfläche, zwischen Fahrzeugrad und Untergrund, wodurch die Traktion auf rutschigem Untergrund erhöht wird.

Die Gleitschutzelementträger 2 werden über Haltegurte 9 als Halteeinrichtungen 8 in Position gehalten. Dazu ist das Laufnetz 4 an der Fahrzeugradrückseite 7' über die Haltegurte 9 und eine Befestigungseinrichtung 10, in der gezeigten Ausführungsform ein Spannring 11, der die Haltegurte 9 in radialer Richtung R zur Nabe N des Fahrzeugrades 3 hinzieht, auf dem Fahrzeugrad 3 verankert.

An der Fahrzeugradvorderseite 7", in der perspektivischen Darstellung der Fig. 1 die hintere Fahrzeugradseite, ist das Laufnetz 4 über entsprechende Haltegurte 9 fixiert, die ein Gurtkreuz G ausbilden, bei welchem die einzelnen Haltegurte 9 in radialer Richtung R von einem Ende der Fahrzeugradlauffläche 7 bis zu dem entgegengesetzten Ende durchgehend erstrecken und im Bereich der Nabe N kreuzen.

Somit weist die in Fig. 1 gezeigte Gleitschutzvorrichtung 1 für das Fahrzeugrad 3 Traktionselemente T, wenigstens eine die Traktionselemente T im montierten Zustand auf der Lauffläche 7 des Fahrzeugrades 3 haltenden biegeschlaffen Halteeinrichtung 8 und wenigstens ein Anschlussorgan 40, durch welches die wenigstens eine Halteeinrichtung 8 mit den Traktionselementen T verbunden ist, auf. Die Halteeinrichtung 8 ist am Anschlussorgan 40 sich vom Anschlussorgan 40 in radialer R und in Umfangsrichtung U weg in Richtung der Radnabe N erstreckend vororientiert festgelegt. Dadurch löst die Gleitschutzvorrichtung 1 das Problem einer Überwanderung der biegeschlaffen Halteeinrichtungen 8 mit Haltegurten 9, wobei sich das am Laufnetz 4, hier an dem Anschlussorgan 40 befestigte Ende 9a des Haltegurtes 9, beim Anfahren zunächst schneller bewegt als das am Spannorgan 11 befestigte Ende 9b des Haltegurtes. 9, wie in Fig. 1 durch die Pfeile V₁, V₂ angedeutet ist. Durch diese Laufunterschiede der Überwanderung V₁ - V₂ muss der Haltegurt 9 am laufnetzseitigen Ende 9a nicht nur die in radialer Richtung R entlang der Längsrichtung des Haltegurtes 9 wirkenden Spannkräfte S aufnehmen. Die Überwanderung V₁ - V₂ der entgegengesetzten Enden 9a, 9b des Haltegurtes 9 führen ferner dazu, dass am laufnetzseitigen Ende 9a eine entgegen der Umlaufrichtung U des Rades 3 wirkende Quer- bzw. Umlaufkraft Z auftritt, die zu einem Verrutschen der die Anbindungsstege 35 umschlingenden Schlaufe 9' des Haltegurtes 9 führen kann.

Als Anschlussorgan 40 ist in der gezeigten Ausführungsform ein Haltebügel 29, 29a als Anschlagsmittel 45 vorgesehen, an dem die Halteeinrichtungen 8, nämlich deren Haltegurte 9 mit ihren laufnetzseitigen Enden 9a angeschlagen sind. Dazu weisen die laufnetzseitigen Enden 9a der Haltegurte 9 jeweils eine Schlaufe 9' auf, welche eine in radiale Richtung R und in Umfangsrichtung U weisende Lastaufnahmefläche 44 des Anschlagsmittels 45 umschlingt. Somit ist die Halteeinrichtung 8 festgelegt sind.

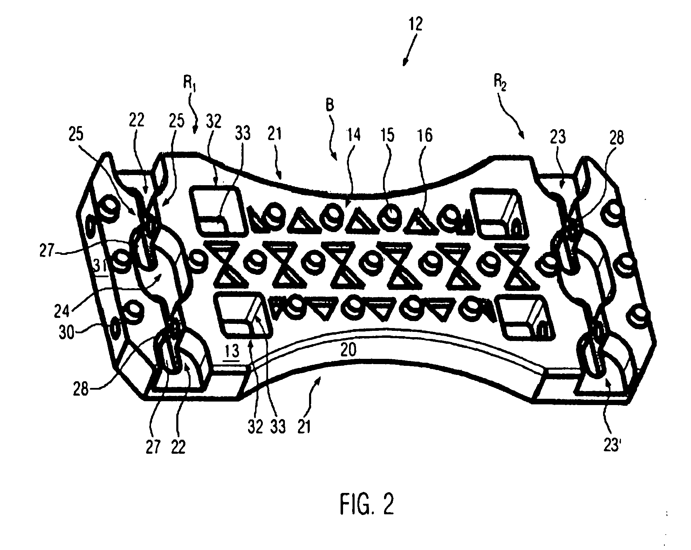

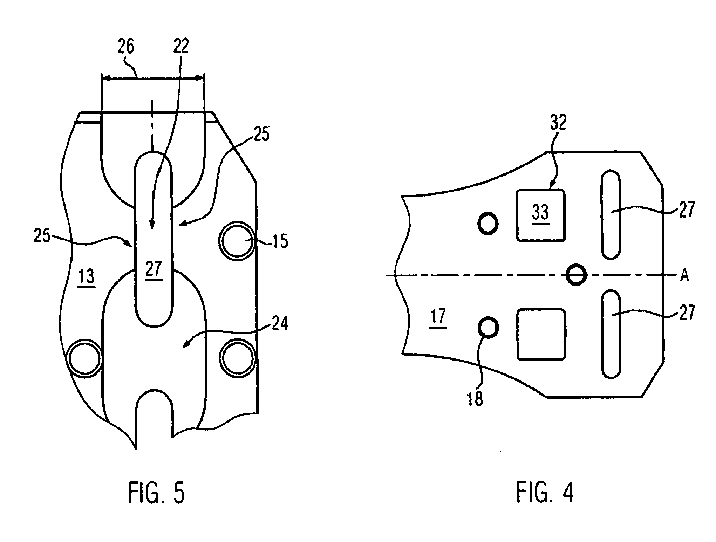

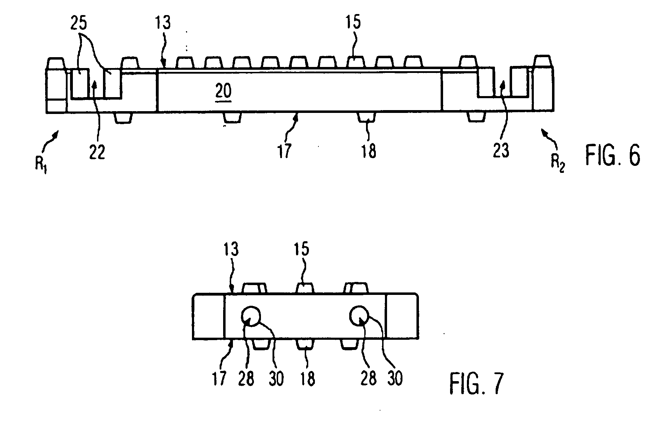

Im Folgenden wird zunächst die Trägerplatte 12 der in Fig. 1 dargestellten Ausführungsform der Gleitschutzvorrichtung unter Bezugnahme auf die Fig. 2 bis 7 näher beschrieben.

Die Trägerplatte 12 besteht aus einem biegsamen Material, beispielsweise Polyurethan und weist eine Lauffläche 13 z.B. mit traktionserhöhenden Gleitschutzelemente 14 in Form von Spikes 15 und Mulden 16 auf.

An der der Lauffläche 13 gegenüberliegenden Unterseite 17 der Trägerplatte 12, die im montierten Zustand mit der Lauffläche 7 des Fahrzeugrades 3 in Kontakt kommt, ist die Trägerplatte 12 mit Mitnehmern 18 versehen, welche die Traktionskräfte vom Gleitschutzelementträger 2 auf das Fahrzeugrad 3 übertragen und einem Durchrutschen des Laufnetzes 4 gegenüber der Radlauffläche 7 entgegenwirken.

Die Trägerplatte 12 ist an ihrer im montierten Zustand in Roll- bzw. Umlaufsrichtung U weisenden Vorderseite 19 sowie an ihrer entgegen der Umlaufrichtung U weisenden Rückseite 20 jeweils mit einer bogenförmigen Aussparung 21 versehen, so dass die Trägerplatte 12 eine im Wesentlichen bikonkave Form aufweist. Die Aussparungen 21 verbessern die Torsionsfähigkeit der Trägerplatte 12 des Gleitschutzelementträgers 2, insbesondere im Mittelbereich B der Trägerplatte 12 um die im montierten Zustand der Gleitschutzvorrichtung 1 parallel zur Umlaufrichtung U weisenden Mittelachse M der Trägerplatte 12 herum. Diese Mittelachse M ist im montierten Zustand auf dem zentralen Bereich der Radlauffläche 7 nahe oder auf der Mittellängsachse L des Rades 3 angeordnet.

An den lateralen, im montierten Zustand der Gleitschutzvorrichtung 1 in axialer Richtung A weisenden axialen Randbereichen R1, R2, die im Wesentlichen nicht durch die Aussparungen 21 eingeschnürt sind, ist die Trägerplatte 12 an ihrer Vorderseite 19 bzw. der der Vorderseite 19 gegenüberliegenden Rückseite 20 jeweils mit einer Aufnahme 22 bzw. 23 für das Laufnetz 4, speziell die Kettenstränge 5 des Laufnetzes 4 versehen. Die Aufnahmen 22, 23 sind in ihrer Form an die Gestalt von Gliedern der Kettenstränge 5 angepasst, die somit formschlüssig in die Aufnahmen 22, 23 eingelegt werden können.

In der gezeigten Ausführungsform ist in beiden axialen Randbereichen R1 und R2 der Trägerplatte 12 eine durchgehende Aufnahme 24 vorgesehen, die einen im Wesentlichen in Umlaufrichtung U verlaufenden Kettenkanal ausbildet, der die Lauffläche 13 der Trägerplatte 12 von deren Vorderseite 19 bis zu deren Rückseite 20 vollständig durchzieht.

Die Aufnahmen 22, 23, 24 weisen Einengungen 25 an den Stellen auf, an denen Kettenglieder aufrecht in der Trägerplatte 12 zum Liegen kommen. Im Übrigen entspricht die Breite 26 der Aufnahmen 22, 23, 24 im Wesentlichen der Außenbreite eines Kettengliedes der Kettenstränge 5, wodurch die Form der Aufnahmen 22, 23, 24 an die Form der Kettenstränge 5 angepasst ist. Zur Verschleißreduzierung der Trägerplatte 12 im Bereich der Aufnahmen 22, 23, 24 weisen die Bereiche der Einengungen 25, in denen die einzelnen Kettenglieder aufrecht in der Trägerplatte 12 angeordnet werden, schlitzförmige Öffnungen 27 auf, an denen die Aufnahmen 22, 23, 24 durch die Unterseite 17 der Trägerplatte 12 hindurchgehen.

Ferner weist die Trägerplatte 12 Einstecköffnungen 28 auf, in die ein Haltebügel 29, 29a eingesetzt werden kann. Die Einstecköffnungen 28 der Trägerplatte 12 erstrecken sich im Wesentlichen quer und senkrecht zur in Umlaufrichtung U weisenden Mittelachse M der Lauffläche 13, d.h. verlaufen in axialer Richtung A des montierten Gleitschutzelementträgers 2. Das eine Ende 30 der Einstecköffnung 28 mündet in einer Axialseite 31, 31' der Trägerplatte 12, die im montierten Zustand in axialer Richtung A weisen, und bildet dort die Einführöffnung 30 für den Haltebügel 29. Von der Einführöffnung 30 aus erstreckt sich die Einstecköffnung 28 im Wesentlichen in axialer Richtung A der im montierten Zustand befindlichen Trägerplatte 12 des Gleitschutzelementträgers 2, durchquert die Aufnahme 22, 23, 24 und mündet schließlich in einer von außen zugänglichen Ausnehmung 32.

Die von außen zugängliche Ausnehmung 32 ist eine durch die Trägerplatte 12 hindurchgehende Öffnung 33, welche die Trägerplatte 12 von der Lauffläche 13 bis zur Unterseite 17 durchdringt, wobei die Ausnehmungsöffnung 33 komplett von der Trägerplatte 12 umschlossen ist.

Die Trägerplatte 12 der gezeigten Ausführungsform ist an jeder Axialseite 31, 31' mit zwei im montierten Zustand in Umlaufrichtung U voneinander beabstandeten parallel verlaufenden Einstecköffnungen 28 versehen, welche die Aufnahme 22, 23, 24 an einer Einengung 25 durchqueren. Dadurch führt ein Einschieben des Haltebügels 29, 29a in die Einstecköffnungen 28 dazu, dass dessen Halteschenkel 34, 34', 34a, 34a' durch die Öffnung eines Kettengliedes geführt werden, dass in aufrechter Position im Bereich einer Einengung 25 eingelegt ist. Somit verankern die in die Einstecköffnung 28 eingesetzten Halteschenkel 34, 34', 34a, 34a' die Kettenstränge 5 des Laufnetzes an dem erfindungsgemäßen Gleitschutzelementträger 2.

Die Ausnehmungsöffnungen 33 sind in dem Bereich an der Trägerplatte 12 angeordnet, an dem die Einschnürung der bogenförmigen Aussparungen 21 an der Vorderseite 19 bzw. Rückseite 20 einsetzt. Die Einstecköffnung 28 erstreckt sich also im Wesentlichen nicht, d.h. endet vor dem tordierbaren, verjüngten biegsamen Bereich B der Trägerplatte 12 zwischen den Ausnehmungsöffnungen 33, in denen die sich gegenüberliegenden Enden 36, 36a der Halteschenkel 29, 29a zum Liegen kommen, der somit gegenüber den von den Halteschenkeln 34, 34', 34a, 34a' eingenommenen axialen Randbereichen R1, R2 eine erhöhte Verformbarkeit aufweist.

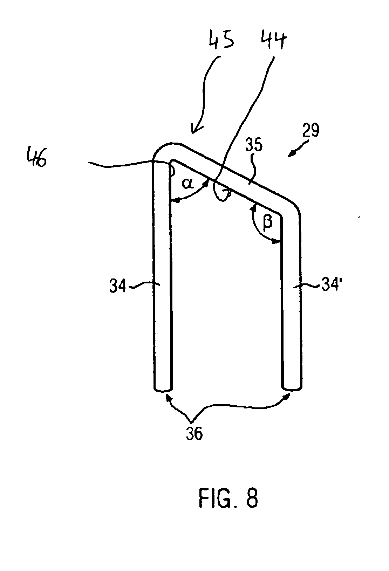

Der Haltebügel 29 des Gleitschutzelementträgers 2 in der in der Fig. 1 dargestellten Ausführungsform der erfindungsgemäßen Gleitschutzvorrichtung 1 ist in Fig. 8 im Detail gezeigt.

Der Haltebügel 29 weist einen Anbindungssteg 35 sowie zwei im Wesentlichen parallel zueinander verlaufende Halteschenkel 34, 34' auf, wodurch sich ein im Wesentlichen C-förmiger Bügel ergibt. Der Anbindungssteg 35, der die Lastaufnahmefläche 44 des in Fig. 8 gezeigten Haltebügels 29 ausbildet, verläuft im Wesentlichen gerade und schräg zu den beiden Halteschenkeln 34, 34'. Da die freien Enden 36 der Halteschenkel 34, 34' im Wesentlichen auf einer Höhe liegen, führt die schräge Anordnung des Anbindungssteges 35 bei dem Haltebügel 29 der in Fig. 8 gezeigten Ausführungsform dazu, dass der eine Schenkel 34' kürzer als der andere Schenkel 34 ist.

Dabei bildet der kürzere Schenkel 34' mit dem Anbindungssteg 35 am entgegen der Rollrichtung U weisenden Ende 35b einen stumpfen Winkel β, in der gezeigten Ausführungsform im Bereich von 120°. Der Längere der beiden Schenkel 34 bildet mit dem Anbindungssteg 35 am in Rollrichtung U weisenden Ende 35b des Anbindungssteges 35 einen spitzen Winkel α, in der gezeigten Ausführungsform von etwa 60°.

Ein Verrutschen des Haltegurtes 9, der in Fig. 8 der Übersichtlichkeit halber weggelassen wurde, speziell bei dessen Spannen in radialer Richtung R wird unterbunden, dass die Lastaufnahmefläche 44 unter einem spitzen Winkel an einen Verschiebeanschlag 46 stößt, welcher in der gezeigten Ausführungsform vom langen Halteschenkel 34 ausgebildet wird.

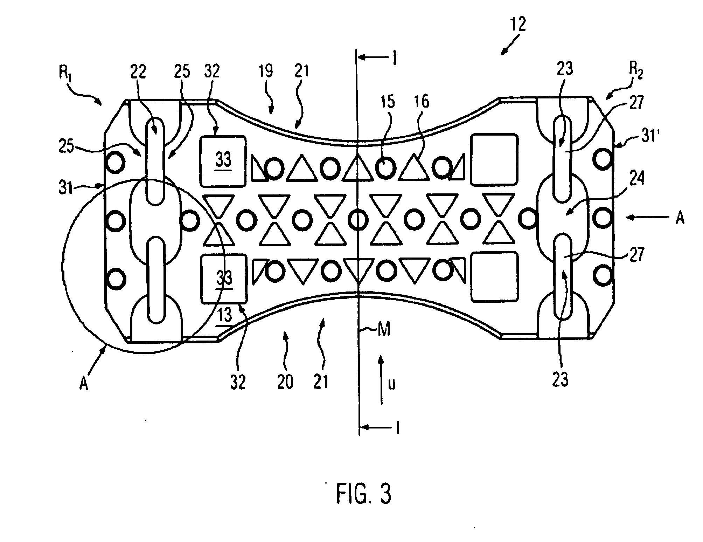

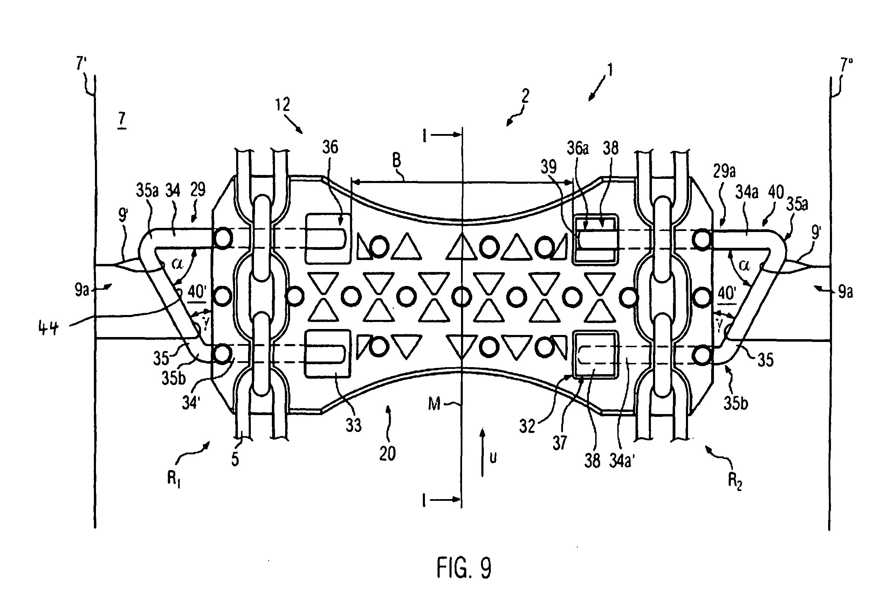

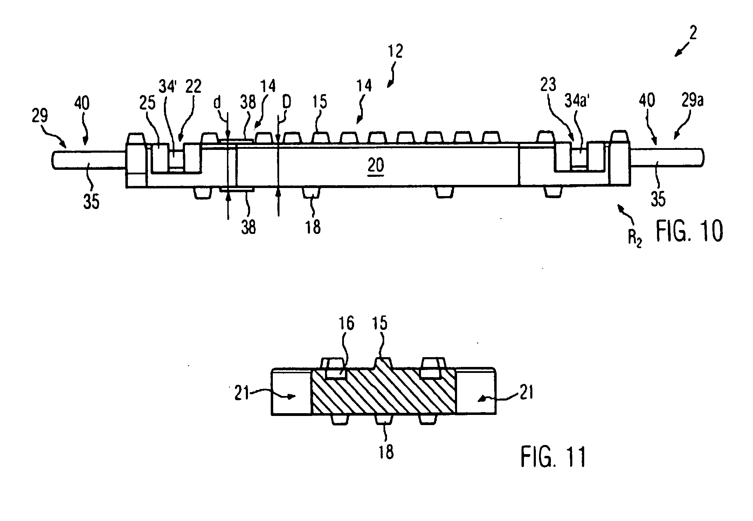

Fig. 9 zeigt den Gleitschutzelementträger 2 der in Fig. 1 dargestellten erfindungsgemäßen Gleitschutzvorrichtung 1, bei dem jeweils ein in Fig. 8 gezeigter Haltebügel 29, 29a von den sich gegenüberliegenden lateralen Axialseiten 31, 31' in die Trägerplatte 12 eingesetzt ist. Fig. 10 zeigte eine Seitenaufsicht des Gleitschutzelementträgers 2 der Fig. 9 in Roll- bzw. Umlaufrichtung U, wobei der Übersichtlichkeit halber die Kettenstränge 5 weggelassen wurden. Fig. 11 zeigt einen Schnitt I-I entlang der Mittelachse M der Trägerplatte 12 der Fig. 3 bzw. 9.

In Fig. 9 ist zu erkennen, dass die Haltebügel 29, 29a in die Trägerplatte 12 so eingesetzt sind, dass die Halteschenkel 34, 34', 34a, 34a' in einer der Einstecköffnungen 28 liegen und die Aufnahme 22, 23, 24 im Bereich einer Einengung 25 durchqueren. Dabei ragen die Halteschenkel 34, 34', 34a, 34a' durch das Auge eines Kettengliedes des Kettenstranges 5 hindurch und verbinden den Kettenstrang 5 mit dem Gleitschutzelementträger 2.

Die Halteschenkel 34, 34', 34a, 34a' erstrecken sich durch die komplette Einstecköffnung 28 bis in die Aufnahmeöffnung 33 hinein. In den Ausnehmungsöffnungen 33 sind Befestigungshülsen 38 als Befestigungselemente 37 angeordnet, die mit den freien Ende 36, 36a der Halteschenkel 34, 34', 34a, 34a' verbunden sind und die Haltebügel 29, 29a somit an der Trägerplatte 12 gegen Abnehmen sichern. Die Haltebügel 29, 29a, insbesondere nebst daran befestigter abriebsbeständiger Befestigungshülsen 38 erhöhen die Stabilität des erfindungsgemäßen Gleitschutzelementträgers 2 in den axialen Randbereichen R1, R2, halten die Kettenstränge 5 des Laufnetzes 4 am Gleitschutzelementträger 2 und reduzieren den Verschleiß der Trägerplatte 12.

Die Befestigungshülsen 38 bestehen aus einem verschleißresistenten Werkstoff, der eine höhere Abriebsfestigkeit als das Material der Trägerplatte 12 aufweist, so dass diese Befestigungselemente 37 neben der Funktion des Sicherns vom Haltebügel 29 und gleichzeitig leicht austauschbare Verschleißelemente darstellen.

In Fig. 9 ist darstellungsbedingt nicht in jeder Ausnehmungsöffnung 33 eine Befestigungshülse 38 eingezeichnet. Der Anschaulichkeit halber sind an der einen Seite im axialen Randbereich R1 die beiden Befestigungshülsen 38 weggelassen und der in die Einstecköffnung 28 eingesetzte Haltebügel 29 ist ohne dieses Sicherungselement gezeigt, wobei die durchgezogene Linie sichtbare Teile des Haltebügels 29 und die gestrichelten Linien nicht sichtbare Bereiche des Haltebügels 29 veranschaulichen.

Gleiches gilt für die Darstellung des zweiten Haltebügels 29a auf der gegenüberliegenden Seite im anderen axialen Randbereich R2, bei dem das freie Ende 36a des kürzeren Schenkels 34a', der im montierten Zustand der Gleitschutzvorrichtung 1 in Umlaufrichtung U vor dem längeren Schenkel 34a liegt, mit der Befestigungshülse 38 verpresst gezeigt ist. Das andere freie Ende 36 des längeren Halteschenkels 34a ist sichtbar gezeichnet, da zu Veranschaulichungszwecken die Befestigungshülse 38 an dieser Stelle in einem Längsschnitt gezeigt ist, so dass auch die Hülsenöffnung 39 zu sehen ist, in die die freien Enden 36 der Halteschenkel 34a, 34a' eingepresst und kraftschlüssig mit dieser verbunden sind.

In Fig. 10 ist eine Aufsicht der Rückseite 20 des Gleitschutzelementträgers 2 der Fig. 9 gezeigt. Darin ist zu erkennen, dass bei der dargestellten Ausführungsform die senkrecht zur Trägerplatte weisende Abmessung d, bei einer zylindrischen Hülse deren Außendurchmesser, der Befestigungshülse 38 in etwa der Dicke D der Trägerplatte 12 im Bereich der Ausnehmung 32 entspricht. Auf diese Weise passt sich die Hülse 38 an die Lauffläche 13 der Trägerplatte 12 an und bildet ein weiteres traktionserhöhendes Gleitschutzelement 14 aus.

Wie in Fig. 1 und 9 zu erkennen ist, bilden die außerhalb der Trägerplatte 12 angeordneten, die Anbindungsstege 35 aufweisenden Abschnitte der Haltebügel 29, 29a ein Anschlussorgan 40 in Form eines asymmetrisch dreieckigen Auges 40' für die Schlaufen 9' an laufnetzseitigen Ende 9a der Haltegurte 9 aus. Die Anschlussorgane 40 dieser Ausführungsform sind auf der Lauffläche 7 des Fahrzeugrades 3 angebracht.

Die Verwendung eines Haltebügels 29, 29a mit schräg zu den Halteschenkeln 34, 34', 34a, 34a' verlaufenden Anbindungssteg 35 ist besonders geeignet, um eine Überwanderung des Laufnetzes 4 besser auffangen zu können.

Verwendet man dagegen einen Haltebügel 29 (nicht gezeigt), bei dem sich die Halteschenkel 34 im Wesentlichen senkrecht zum Anbindungssteg 35 erstrecken, besteht die Gefahr, dass das laufnetzseitige Ende 9a des Haltegurtes 9 in die Ecke am entgegen der Rollrichtung U weisenden Ende 35b des Haltewinkels 29, 29a rutscht und sich dort festsetzt. Ein derartiges Festsetzen ist insbesondere problematisch, da dadurch der Haltegurt 9 nicht gleichmäßig über seine gesamte Breite, sondern unregelmäßig belastet wird, sich aufräufelt und stärkeren Verschleiß zeigt.

Bei dem in Fig. 9 gezeigten Gleitschutzelementträger 2 und der diesen Gleitschutzelementträger aufweisenden, erfindungsgemäßen Gleitschutzvorrichtung 1 der Fig. 1 dargestellten Ausführungsform sind die Anbindungsstege 35 schräg unter einen Winkel γ von 30° bis 35° zur Roll- bzw. Umlaufrichtung U des montierten Gleitschutzelementträgers 2 ausgerichtet, wobei das in Rollrichtung U weisende Ende 35a der Anbindungsstege 35 weiter von der Mittellängsachse L des Fahrzeugrades 3, die in der gezeigten Ausführungsform mit der Mittelachse M der Trägerplatte 12 im Wesentlichen zusammenfällt, entfernt ist als das entgegen der Rollrichtung U weisende Ende 35b der Anbindungsstege 35. Dies führt zu einer Vororientierung des laufnetzseitigen Endes 9a des Haltegurtes 9 an diesem Anschlussorgan 40, welche die Überwanderung kompensiert.

Ein Winkel γ zwischen Lastaufnahmefläche 44 und Umlaufrichtung zwischen 20° und 50°, vorzugsweise zwischen 30° und 40° hat sich als besonders vorteilhaft herausgestellt, da bei diesen Winkeln die Lastaufnahmefläche, in der gezeigten Ausführungsform der Anbindungssteg 35, nahezu senkrecht ausgerichtet ist zu der auf den Haltegurt am Anschlussorgan 40 ausgeübten resultierenden Kraft, bestehend aus den Komponenten der im Wesentlichen in radialer Richtung wirkenden Spannkraft und der durch die Überwanderung am Anschlussorgan 40 hervorgerufenen und entgegen der Rollrichtung weisenden Umlaufkraft Z. Dadurch wird ein Verrutschen des Haltegurtes am Anschlussorgan besonders effektiv unterbunden. Der optimale Winkel γ hängt dabei maßgeblich von der Umlaufkraft Z ab, die wiederum insbesondere durch die Umlaufgeschwindigkeitsdifferenz V₁ - V₂ beeinflusst wird.

Ferner unterbindet der spitze Winkel α zwischen dem längeren Halteschenkel 34, 34a und dem Anbindungssteg 35 ein Verrutschen der Schlaufe 9' des Haltegurtes 9 auf diese Ecke, wenn nur die Spannkraft S ohne zusätzliche Querkraft Z anliegt.

Im Folgenden wird auf eine weitere vorteilhafte Ausgestaltungen des erfindungsgemäßen Gleitschutzvorrichtung 1 eingegangen, die einen abgewandelten Haltebügel 29, 29' aufweist. Für Elemente, deren Funktion und/oder Aufbau ähnlich oder identisch zu Teilen der vorherigen Ausführungsformen sind, werden die gleichen Bezugszeichen verwendet.

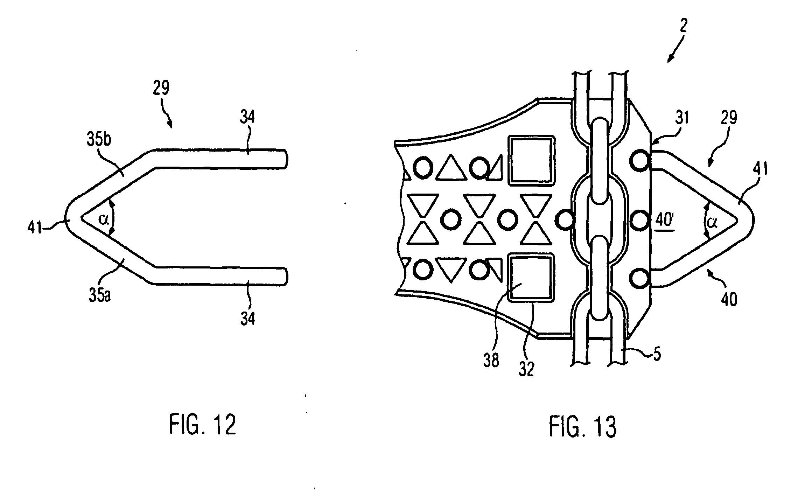

Die Fig. 12 und 13 zeigen einen Gleitschutzelementträger 2 mit einem Haltebügel 29 gemäß einer zweiten Ausführungsform, bei dem der Anbindungssteg 35 im Wesentlichen winkelförmig ausgestaltet ist. Beim Übergang vom einen zum anderen Halteschenkel 34 weist der Anbindungssteg 35 eine Knickstelle 41 auf, an welcher die beiden Abschnitte 35a und 35b des Anbindungssteg 35 einen spitzen Winkel α bilden.

Beim Einsetzen eines derartigen Haltebügels 29 in analoger Weise zum Haltebügel 29, 29a der Fig. 8 in die Trägerplatte, die in den Fig. 2 und 3 gezeigt ist, bildet der außerhalb der Trägerplatte 12 angeordnete, den Anbindungssteg 35 aufweisende Abschnitt des Haltebügels 29 ein Anschlussorgan 40 in Form eines im Wesentlichen symmetrischen dreieckigen Auges 40' aus. Dabei bildet die Axialseite 31 der Trägerplatte 12, in die der Haltebügel 29 eingesetzt ist, die Basis des Dreiecks, welche dem spitzen Winkel α an der Knickstelle 41 des Anbindungssteges 35 gegenüber liegt, wobei die Halteschenkel 34 im Wesentlichen vollständig in die Einstecköffnung 28 (nicht gezeigt) eingesetzt sind.

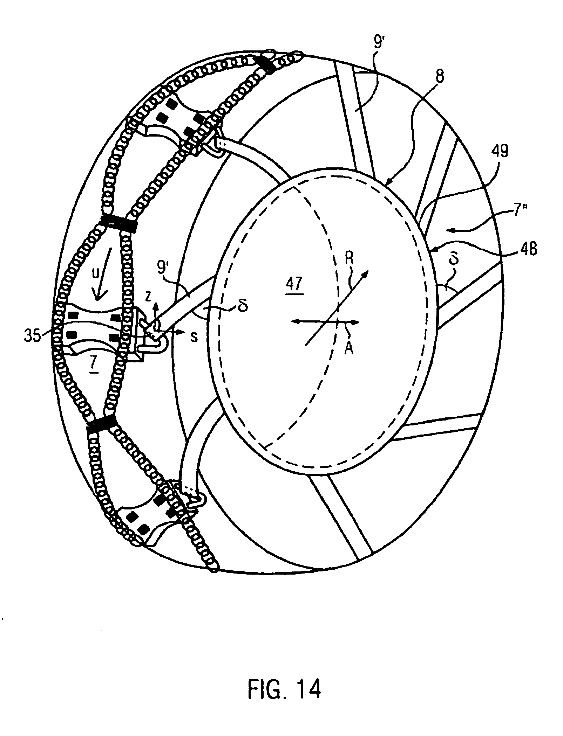

Im Folgenden wird auf eine weitere Ausgestaltung der erfindungsgemäßen Gleitschutzvorrichtung 1 eingegangen, die in Fig. 14 gezeigt ist. Für Elemente, deren Funktion und/oder Aufbau ähnlich oder identisch zu Teilen der vorherigen Ausführungsformen sind, werden die gleichen Bezugszeichen verwendet.

Fig. 14 zeigt die auf dem Fahrzeugrad 3 montierte erfindungsgemäße Gleitschutzvorrichtung 1 in einer schematischen perspektivischen Darstellung entsprechend der Ansicht der Fig. 1. Im Unterschied zur Fig. 1 weist in Fig. 14 jedoch die Fahrzeugradvorderseite 7" in Richtung des Betrachters.

Die Gleitschutzvorrichtung der Fig. 14 unterscheidet sich lediglich durch die Ausgestaltung der Halteeinrichtung 8 von der in Fig. 1 gezeigten Ausführungsform.

Die Halteeinrichtung der Fig. 14 umfasst eine scheibenförmige Abdeckung 47 z.B. aus einen textilen Bahnmaterial. Am äußeren Umfangsrand 48 sind Halteschlaufen 9' strahlenartig und gleichmäßig über den Umfangsrand 48 verteilt angebracht, beispielsweise angenäht.

Im Unterschied zur Ausführungsform der Fig. 1 sind die Halteschlaufen 9' an der Nahtstelle 49 mit der Abdeckung 47 nicht symmetrisch, d.h. so angebracht, dass sich die Schlaufen 9' im Wesentlichen in radialer Richtung R am Umfangsrand 48 der Abdeckung 47 ansetzen. Vielmehr sind Schlaufen 9' und Abdeckung asymmetrisch verbunden, wobei die Schlaufen 9' schräg in Umlaufrichtung U weisend angenäht. Zwischen Nahtstelle 49 und der in Umlaufrichtung weisenden Seite der Schlaufen 9' bildet sich daher ein spitzer Winkel δ, der etwa 90° - α beträgt, wodurch die Schlaufen im Wesentlichen senkrecht auf den Anbindungssteg 35 treffen, welchen sie umschlingen, und sich im Wesentlichen entlang der Richtung der aus Spannkraft S und Umlaufkraft Z resultierenden Kraft erstrecken.

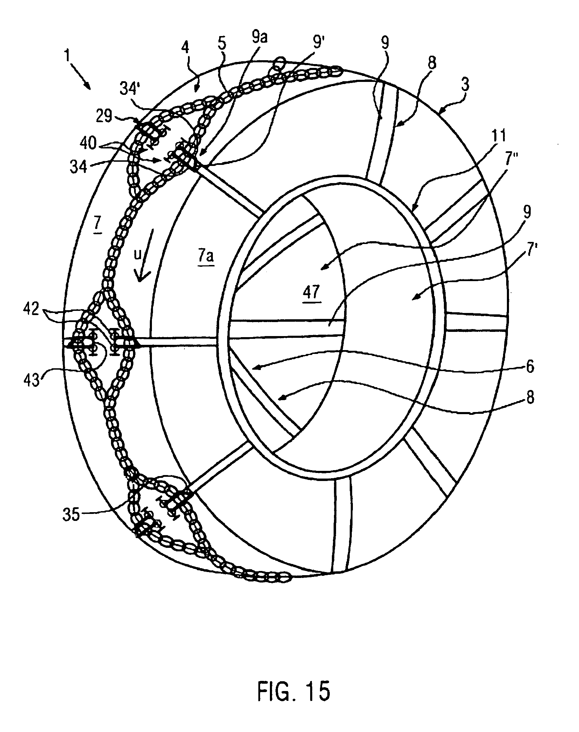

Im Folgenden wird auf eine weitere Ausgestaltung der erfindungsgemäßen Gleitschutzvorrichtung 1 eingegangen, die in Fig. 15 gezeigt ist. Für Elemente, deren Funktion und/oder Aufbau ähnlich oder identisch zu Teilen der vorherigen Ausführungsformen sind, werden die gleichen Bezugszeichen verwendet.

Fig. 15 zeigt die auf dem Fahrzeugrad 3 montierte erfindungsgemäße Gleitschutzvorrichtung 1 in einer schematischen perspektivischen Darstellung entsprechend der Ansicht der Fig. 1.

Im Unterschied zu der ersten Ausführungsform der Fig. 1 weist das Laufnetz 4 der Ausführungsform der Fig. 14 keine Gleitschutzelementträger 2 auf, sondern umfasst lediglich Kettenstränge 5, die auf der Lauffläche 7 des Fahrzeugrades 3 über Anschlussorgane 40 und biegeschlaffe Haltegurte 9gehalten sind.

Die Anschlussorgane 40 dieser Ausführungsform bestehen aus einem Haltebügel 29, welcher im Wesentlichen dem Haltebügel 29 der ersten Ausführungsform aus Fig. 1 und 9 entspricht, wobei jedoch an den freien Enden 36 jedes Halteschenkels 34, 34' Befestigungsöffnungen 42 vorgesehen sind, durch welche ein Befestigungsbolzen 43 hindurch gesteckt ist und den nach Art eines Schäkels ausgebildeten Bügel 29, 29a verschließt. Der Haltebügel 29 kann auf einfache Weise in die Kettenstränge 5 des Laufnetzes eingehängt werden, indem die Halteschenkel 34, 34' durch einzelne Kettenglieder gesteckt werden, und mit dem Kettensträngen 5 durch Einsetzen des Befestigungsbolzens 43 in die Befestigungsöffnungen 42 formschlüssig verbunden werden. Von diesen Anschlussorganen 40 sind in der in Fig. 15 gezeigten Ausführungsform je Radseite 7', 7" acht Stück die gleichmäßig beabstandet über den Umfang des Fahrzeugradlauffläche 7a verteilt angebracht. Dabei weisen die Anbindungsschenkel 35 der Anschlussorgan 40 jeweils im Wesentlichen in axialer Richtung A.

An der Fahrzeugreifenvorderseite 7", die in der Darstellung der Fig. 15 nur abschnittsweise zu erkennen ist, sind vier Haltegurte 9, die ein Gurtkreuz G ausbilden, als Halteeinrichtung 8 vorgesehen.

Jeder Haltegurte 9 ist an beiden Enden mit jeweils einer Schlaufe 9' versehen, die den Anbindungssteg 35 jeweils eines Anschlussorgans 40 umschlingt. Die einzelnen Haltegurte 9 erstreckt sich in radialer Richtung R im Wesentlichen über die komplette Reifenvorderseite 7" und verbinden die sich radial gegenüberliegenden Anschlussorgane 40. In der Mitte, im Bereich der Nabe N (nicht dargestellt) des Fahrzeugrades 3 treffen sich einzelnen Haltegurte 9 und bilden somit das Gurtkreuz G aus.

Die Ausführung eines Gurtkreuzes G hat den Vorteil, dass in diesem Fall an der Fahrradvorderseite 7" keine weitere Spannvorrichtung 11 erforderlich ist, da die durchgehenden Haltegurte 9 die sich in radialer Richtung R gegenüberliegenden Anschlussorgane 40 kraftübertragend verbinden.

Auf dem Gurtkreuz G ist eine scheibenförmige Abdeckung 47 aus einem Textilstoff angebracht, beispielsweise formschlüssig durch Schmelzschweißen oder aber durch Vernähen, welche Abdeckung 47 die Felge (nicht dargestellt) des Rades verdeckt und somit vor Verschmutzung schützt.

Anstelle einer Gurtkreuzes G mit Abdeckung 47 könnte die Abdeckung 47 auch mit Halteschlaufen und/oder Haltegurten, -seilen oder sonstigen biegeschlaffen Halteelementen versehen werden und als Halteeinrichtung 8 eingesetzt werden, wie dies in Fig. 14 beispielsweise gezeigt ist.

Auf der Fahrzeugradrückseite 7' kann eine der in Fig. 1 gezeigten, mit einem Spannring 11 ausgestattete Befestigungsvorrichtung 10 vergleichbare Anordnung und Befestigung der befestigungsseitigen Enden 9b der Haltegurte 9 vorgesehen sein, um das Laufnetz 4 auf dem Fahrzeugrad 3 zu halten.

In Fig. 15 liegen die das Anschlussorgan 40 bildenden Haltebügel 29 auf der Fahrzeugradlauffläche 7, könnte jedoch auch an den jeweiligen Fahrzeugradflanken 7a angeordnet werden, was den Vorteil hätte, dass ihre Anbindungsstege 35, um welche die Schlaufe 9' der Haltegurte 9 gewickelt ist, nicht in den Bereich der Fahrzeugradaufstandsfläche zwischen Fahrzeugrad 3 und Fahrbahnuntergrund gerät und somit weniger schnell verschleißt.

Anstelle des in den Kettenring 5' als Anschlussorgan 40 eingehängten Bügels 29 bzw. Schäkels könnte in Fig. 15 auch ein dreieckiges Kettenglied oder ein dreieckiger Karabiner als Anschlussorgans 40 so in den Kettenring 5' integriert werden, dass eine spitze des Dreiecks zur Nabe N gerichtet ist und einer der Schenkel als Anbindungssteg fungiert.

In den Ausführungsbeispielen, die in den Figuren gezeigt sind, ist beispielhaft eine Halteeinrichtung 8 mit Haltegurten 9 dargestellt. Die erfindungsgemäße Gleitschutzvorrichtung kann genauso gut mit beliebigen anderen biegeschlaffen Halteeinrichtungen 8, z.B. Bändern, Riemen oder Seilen, realisiert werden.

## Patentansprüche

1. Gleitschutzvorrichtung (1) für ein Fahrzeugrad (3) mit Traktionselementen (T), wenigstens einer die Traktionselemente (T) im montierten Zustand auf der Lauffläche (7) des Fahrzeugrades (3) haltenden biegeschlaffen Halteeinrichtung (8) und mit wenigstens einem Anschlussorgan (40), durch welches die wenigstens eine Halteeinrichtung (8) mit den Traktionselementen (T) verbunden ist, wobei die Halteeinrichtung (8) am Anschlussorgan (40) sich vom Anschlussorgan (40) in radialer (R) und in Umfangsrichtung (U) weg in Richtung der Radnabe (N) erstreckend vororientiert festgelegt ist, **dadurch gekennzeichnet, dass** das Anschlussorgan (40) ein im Wesentlichen dreieckiges Auge (40') aufweist.

2. Gleitschutzvorrichtung (1) gemäß Anspruch 1, **dadurch gekennzeichnet, dass** die Halteeinrichtung (8) an einer in radialer (R) und in Umfangsrichtung (U) weisenden Lastaufnahmefläche (44) des Anschlussorgans (40) festgelegt ist.

3. Gleitschutzvorrichtung (1) gemäß Anspruch 1 oder 2, **dadurch gekennzeichnet, dass** ein Anschlagsmittel (45), an dem die Halteeinrichtung (8) angeschlagen ist, als Anschlussorgan (40) vorgehen ist.

4. Gleitschutzvorrichtung (1) gemäß Anspruch 3, **dadurch gekennzeichnet, dass** das Anschlagsmittel (45) die Lastaufnahmefläche (44) aufweist.

5. Gleitschutzvorrichtung (1) gemäß einem der Ansprüche 1 bis 4, **dadurch gekennzeichnet, dass** das Anschlussorgan (40) asymmetrisch ausgestaltet ist.

6. Gleitschutzvorrichtung (1) gemäß einem der Ansprüche 1 bis 5, **dadurch gekennzeichnet, dass** am Anschlussorgan (40) wenigstens ein Anbindungssteg (35) vorgesehen ist, der die Lastaufnahmefläche (44) ausbildet.

7. Gleitschutzvorrichtung (1) gemäß Anspruch 6, **dadurch gekennzeichnet, dass** ein Haltebügel (2) mit zwei im wesentlichen parallel zueinander verlaufenden Halteschenkel (34, 34', 34a, 34a') und dem dazwischen verlaufenden Anbindungssteg (35) das Anschlussorgan (40) ausbildet.

8. Gleitschutzvorrichtung (1) gemäß Anspruch 7, **dadurch gekennzeichnet, dass** sich der Anbindungssteg (35) im Wesentlichen schräg zwischen den Halteschenkeln (34, 34', 34a, 34a') erstreckt.

9. Gleitschutzvorrichtung (1) gemäß Anspruch 7, **dadurch gekennzeichnet, dass** der Anbindungssteg (35) im Wesentlichen winkelförmig zwischen den beiden Halteschenkeln (34, 34', 34a, 34a') verläuft.

10. Gleitschutzvorrichtung (1) gemäß einem der Ansprüche 2 bis 9, **dadurch gekennzeichnet, dass** die Lastaufnahmefläche (44) in Umlaufrichtung (U) unter einem spitzen Winkel (α) an einen Verschiebeanschlag (46) stößt.

11. Gleitschutzvorrichtung (1) gemäß einem der Ansprüche 8 bis 10, **dadurch gekennzeichnet, dass** einer der beiden Halteschenkel (34, 34', 34a') den Verschiebeanschlag (46) ausbildet.

12. Gleitschutzvorrichtung (1) gemäß einem der Ansprüche 1 bis 11, **dadurch gekennzeichnet, dass** die Halteeinrichtung (8) wenigstens einen Haltegurt (9) umfasst.

13. Gleitschutzvorrichtung (1) gemäß einem der Ansprüche 1 bis 12, **dadurch gekennzeichnet, dass** die Anschlussorgane (40) im montierten Zustand auf der Lauffläche (7) und/oder einer Flanke (7a) des Fahrzeugrades (3) angeordnet sind.

## Claims

1. Anti-skid device (1) for a vehicle wheel (3) with traction elements (T), at least one pliable retaining means (8) holding the traction elements (T) on the tread (7) of the vehicle wheel (3) in the mounted state, and with at least one link member (40), by means of which the at least one retaining means (8) is connected to the traction elements (T), and the retaining means (8) is attached to the link member (40) in a pre-oriented arrangement extending out from the link member (40) in the radial (R) and circumferential direction (U) towards the wheel hub (N), **characterised in that** the link member (40) is an essentially triangular eye (40').

2. Anti-skid device (1) according to claim 1, **characterised in that** the retaining means (8) is attached to a load bearing surface (44) of the link member (40) pointing in the radial (R) and circumferential direction (U).

3. Anti-skid device (1) as claimed in claim 1 or 2, **characterised in that** a fastening means (45) to which the retaining means (8) is attached is provided as the link member (40).

4. Anti-skid device (1) as claimed in claim 3, **characterised in that** the fastening means (45) incorporates the load bearing surface (44).

5. Anti-skid device (1) as claimed in one of claims 1 to 4, **characterised in that** the link member (40) is of an asymmetrical design.

6. Anti-skid device (1) as claimed in one of claims 1 to 5, **characterised in that** at least one connecting web (35) is provided on the link member (40), which constitutes the load bearing surface (44).

7. Anti-skid device (1) as claimed in claim 6, **characterised in that** a retaining bracket (2) with two retaining legs (34, 34', 34a, 34a') extending essentially parallel with one another and the connecting web (35) extending in-between constitutes the link member (40).

8. Anti-skid device (1) as claimed in claim 7, **characterised in that** the connecting web (35) extends essentially obliquely between the retaining legs (34, 34', 34a, 34a').

9. Anti-skid device (1) as claimed in claim 7, **characterized in that** the connecting web (35) extends essentially angled between the two retaining legs (34, 34', 34a, 34a').

10. Anti-skid device (1) as claimed in one of claims 2 to 9, **characterised in that** the load bearing surface (44) runs against a sliding stop (46) at an acute angle (α) in the circumferential direction (U).

11. Anti-skid device (1) as claimed in one of claims 8 to 10, **characterised in that** one of the two retaining legs (34, 34', 34a') acts as the sliding stop (46).

12. Anti-skid device (1) as claimed in one of claims 1 to 11, **characterised in that** the retaining means (8) comprises at least one retaining belt (9).

13. Anti-skid device (1) as claimed in one of claims 1 to 12, **characterised in that** the link members (40) are disposed on the tread (7) and/or a side wall (7a) of the vehicle wheel (3) in the mounted state.

## Revendications

1. Dispositif antidérapant (1) pour une roue de véhicule (3), avec des éléments de traction (T), au moins un dispositif de retenue (8) flexible, qui retient les éléments de traction (T), à l'état monté, sur la surface de roulement (7) de la roue (3), et au moins un organe de raccordement (40) grâce auquel le ou les dispositifs de retenue (8) sont reliés aux éléments de traction (T), étant précisé que le dispositif de retenue (8) est fixé à l'organe de raccordement (40) en étant pré-orienté et en s'étendant à partir de celui-ci dans le sens radial (R) et dans le sens circonférentiel (U) en direction du moyeu (N), **caractérisé en ce que** l'organe de raccordement (40) comporte un oeillet (40') globalement triangulaire.

2. Dispositif antidérapant (1) selon la revendication 1, **caractérisé en ce que** le dispositif de retenue (8) est fixé à une surface porteuse de charge (44) de l'organe de raccordement (40) qui est dirigée dans le sens radial (R) et dans le sens circonférentiel (U).

3. Dispositif antidérapant (1) selon la revendication 1 ou 2, **caractérisé en ce qu'**il est prévu comme organe de raccordement (40) un moyen d'accrochage (45) auquel le dispositif de retenue (8) est accroché.

4. Dispositif antidérapant (1) selon la revendication 3, **caractérisé en ce que** le moyen d'accrochage (45) présente une surface porteuse de charge (44).

5. Dispositif antidérapant (1) selon l'une des revendications 1 à 4, **caractérisé en ce que** l'organe de raccordement (40) a une forme asymétrique.

6. Dispositif antidérapant (1) selon l'une des revendications 1 à 5, **caractérisé en ce qu'**il est prévu sur l'organe de raccordement (40) au moins une branche de liaison (35) qui forme la surface porteuse de charge (44).

7. Dispositif antidérapant (1) selon la revendication 6, **caractérisé en ce qu'**un étrier de fixation (2) avec deux branches de fixation (34, 34', 34a, 34a') essentiellement parallèles et avec la branche de liaison (35) qui s'étend entre les deux forme l'organe de raccordement (40).

8. Dispositif antidérapant (1) selon la revendication 7, **caractérisé en ce que** la branche de liaison (35) s'étend essentiellement en biais entre les branches de fixation (34, 34', 34a, 34a').

9. Dispositif antidérapant (1) selon la revendication 7, **caractérisé en ce que** la branche de liaison (35) s'étend avec une forme essentiellement angulaire entre les deux branches de fixation (34, 34', 34a, 34a').

10. Dispositif antidérapant (1) selon l'une des revendications 2 à 9, **caractérisé en ce que** la surface porteuse de charge (44) fait suite à une butée de déplacement (46), dans le sens circonférentiel (U), suivant un angle aigu (α).

11. Dispositif antidérapant (1) selon l'une des revendications 8 à 10, **caractérisé en ce que** l'une des deux branches de fixation (34, 34', 34a') forme la butée de déplacement (46).

12. Dispositif antidérapant (1) selon l'une des revendications 1 à 11, **caractérisé en ce que** le dispositif de retenue (8) comprend au moins une courroie de retenue (9).

13. Dispositif antidérapant (1) selon l'une des revendications 1 à 12, **caractérisé en ce que** les organes de raccordement (40) sont disposés, à l'état monté, sur la surface de roulement (7) et/ou sur un flanc (7a) de la roue de véhicule (3).
